# EUROPÄISCHE PATENTSCHRIFT

(11) **EP 3 930 949 B1**
(45) Veröffentlichungstag und Bekanntmachung des Hinweises auf die Patenterteilung: **27.07.2022**
(21) Anmeldenummer: 20706267.0
(22) Anmeldetag: 22.02.2020
(51) Int. Cl.: B23F 23/12, G01B 5/012, B23F 5/04, G01B 5/20, G01B 11/24, B23Q 17/24

(54) **VERFAHREN ZUM SCHLEIFEN ODER POLIEREN EINES ZAHNRADS ODER EINES WERKSTÜCKS MIT EINEM ZAHNRADÄHNLICHEN PROFIL IN EINER SCHLEIF- ODER POLIERMASCHINE**
METHOD FOR GRINDING OR POLISHING A GEARWHEEL OR A WORKPIECE WITH A GEARWHEEL-LIKE PROFILE IN A GRINDING OR POLISHING MACHINE
PROCÉDÉ DE PONÇAGE OU DE POLISSAGE D'UNE ROUE DENTÉE OU D'UNE PIÈCE DOTÉE D'UN PROFILÉ DE TYPE ROUE DENTÉE DANS UNE MACHINE DE PONÇAGE OU DE POLISSAGE

(30) Priorität: 26.02.2019 DE 102019104812
(43) Veröffentlichungstag der Anmeldung: 05.01.2022
(73) Patentinhaber: Kapp Niles GmbH & Co. KG, 96450 Coburg (DE)
(72) Erfinder: MÜLLER, Frank, 96484 Meeder (DE); WÖLFEL, Friedrich, 96450 Coburg (DE)
(74) Vertreter: Gosdin, Carstensen & Partner Patentanwälte Partnerschaftgesellschaft mbB
(86) Internationale Anmeldenummer: PCT/EP2020/054707
(87) Internationale Veröffentlichungsnummer: WO 2020/173843

(56) Entgegenhaltungen:
- EP-A1- 2 284 484
- EP-A1- 3 034 221
- EP-A1- 3 257 629
- WO-A1-2018/048872
- DE-A1- 19 857 592
- US-A1- 2018 257 158

## Beschreibung

Die Erfindung betrifft ein Verfahren zum Schleifen oder Polieren eines Zahnrads oder eines Werkstücks mit einem zahnradähnlichen Profil in einer Schleif- oder Poliermaschine, wobei die Schleif- oder Poliermaschine mindestens zwei Werkstückspindeln zur Aufnahme eines Werkstücks und mindestens eine Schleif- oder Polierspindel mit einem Schleif- oder Polierwerkzeug aufweist.

Schleifmaschinen mit mehr als einer Werkstückspindel sind im Stand der Technik bekannt. Sie haben den Vorteil, die Nebenzeiten bei der Bearbeitung erheblich reduzieren zu können. Zeitlich parallel zur Bearbeitung eines Werkstücks auf einer Werkstückspindel kann dann nämlich die Be- und Entladung eines Werkstücks auf der anderen Werkstückspindel erfolgen. Nach der Beladung wird das Werkstück auf einer zweiten Werkstückspindel ausgerichtet und eingemittet, d. h. die Lage der Zahnlücken bzw. Profillücken des vorgefertigten Werkstücks, z. B. in Form eines Zahnrads, wird festgestellt, so dass dann beim eigentlichen Schleifen das Schleifwerkzeug gezielt in die Lücke eintreten kann.

Dabei gibt die Taktzeit des Prozesses vor, wie lange das Be- und Entladen sowie das Ausrichten des Werkstücks dauern dürfen.

Daher wird zur Erfassung der Lage der Zahnlücken bzw. Profillücken zumeist ein berührungslos arbeitender induktiver Sensor verwendet, der den Umfang der Verzahnung bzw. Profilierung schnell abfahren kann, um so festzustellen, wo die Lücken liegen, in welche das Schleifwerkzeug eintauchen muss. Ein solcher Sensor kann also mittels der erfassbaren Schaltsignale die Lückenmitten eines Zahnrad oder einer ähnlichen Profilierung erkennen und somit Rückschlüsse auf den Härteverzug und die Position des Werkstücks auf der Werkstückspindel ziehen.

Mit einer solchen Lösung ist es allerdings nicht möglich, das tatsächlich vorliegende Aufmaß auf den Flanken der Verzahnung bzw. Profilierung zu ermitteln.

Die DE 198 57 592 A1 offenbart ein Verfahren zum Schleifen oder Polieren eines Zahnrads oder eines Werkstücks mit einem zahnradähnlichen Profil in einer Schleif- oder Poliermaschine, wobei die Schleif- oder Poliermaschine mindestens zwei Werkstückspindeln zur Aufnahme eines Werkstücks und mindestens eine Schleif- oder Polierspindel mit einem Schleif- oder Polierwerkzeug aufweist, wobei das Verfahren die Schritte aufweist:
a) Schleifen oder Polieren eines ersten auf einer Werkstückspindel aufgenommenen Werkstücks; und
b) zeitlich parallel zum Schleifen oder Polieren des ersten Werkstücks: Aufnehmen eines zweiten Werkstücks auf der weiteren Werkstückspindel und Vermessen der Verzahnung oder des zahnradähnlichen Profils des Werkstücks, um die Lage der Zahnlücken oder Profillücken zu ermitteln, wobei das Vermessen der Verzahnung oder des zahnradähnlichen Profils das Abtasten der Zahn- oder Profilflanken mindestens einer Zahn- oder Profillücke mittels eines taktilen Messelements oder eines berührungslosen Messmittels umfasst.

Für das Ausrichten der Zahnräder auf den Werkstückspindeln sind Sensoren vorgesehen; die Erfassung des effektiven Aufmaßes auf den Zahnflanken erfolgt nicht. Die EP 2 284 484 A1 beschreibt ein Verfahren zum schnellen Messen des Aufmaßes eines Zahnrads, liefert allerdings keinen Hinweis auf ein Bearbeitungskonzept mit zwei Werkstückspindeln.

Wenn hier und nachfolgend vom Prozess des Schleifens gesprochen wird, ist hierunter genauso auch der alternative Prozess des Polierens zu verstehen, für den die vorliegende Erfindung genauso zur Anwendung kommen kann.

Der Erfindung liegt die **Aufgabe** zugrunde, ein Verfahren der eingangs genannten Art so fortzubilden, dass es möglich wird, zeitneutral und ohne den Einsatz externer Messsysteme verbesserte Informationen über das zu schleifende oder zu polierende Werkstück zu erhalten und so den Schleif- oder Polierprozess zu optimieren. Somit soll also ohne zusätzliche Bearbeitungszeiten sowie ohne den Einsatz externer Messsysteme ein verbessertes Schleif- oder Polierergebnis erzielen werden können.

Die Lösung dieser Aufgabe durch die Erfindung sieht vor, dass das Verfahren die Schritte aufweist:
a) Schleifen oder Polieren eines ersten auf einer Werkstückspindel aufgenommenen Werkstücks;
b) zeitlich parallel zum Schleifen oder Polieren des ersten Werkstücks:
   Aufnehmen eines zweiten Werkstücks auf der weiteren Werkstückspindel und Vermessen der Verzahnung oder des zahnradähnlichen Profils des Werkstücks, um die Lage der Zahnlücken oder Profillücken zu ermitteln, wobei das Vermessen der Verzahnung oder des zahnradähnlichen Profils das Abtasten der Zahn- oder Profilflanken mindestens einer Zahn- oder Profillücke mittels eines taktilen Messelements oder eines berührungslosen Messmittels umfasst, um das effektive Aufmaß auf den Zahn- oder Profilflanken zu ermitteln;
c) nach Beendigung des Schleifens oder Polierens des ersten Werkstücks: Schleifen oder Polieren des zweiten auf der weiteren Werkstückspindel aufgenommenen Werkstücks unter Zugrundelegung der ermittelten Lage der Zahnlücken oder Profillücken und/oder des gemessenen effektiven Aufmaßes auf der Zahn- oder Profilflanke.

Bei der Durchführung des obigen Schritts b) kann auch eine Mehrzahl von Zahn- oder Profillücken abgetastet werden; insbesondere können alle Zahn- oder Profillücken abgetastet werden.

Die Vermessung gemäß obigem Schritt b) erfolgt zunächst bevorzugt mittels eines Messtasters. Es ist alternativ aber auch möglich, dass die Vermessung mittels eines Lasers erfolgt.

Eine bevorzugte Ausgestaltung des Verfahrens sieht vor, dass das Schleifen oder Polieren gemäß obigem Schritt c) unter Vorgabe von Schleif- oder Polierparametern erfolgt, die das tatsächlich vorliegende Aufmaß auf den Zahn- oder Profilflanken berücksichtigt. Hierbei kann insbesondere der beeinflusste Parameter die Vorschubgeschwindigkeit zwischen Schleif- oder Polierwerkzeug und Werkstück und/oder die Anzahl der Schleif- oder Polierhübe und/oder die Größe der Zustellung des Schleif- oder Polierwerkzeug zum Werkstück sein.

Nach dem Schleifen gemäß obigem Schritt c) kann ein nochmaliges Vermessen der geschliffenen oder polierten Verzahnung oder des zahnradähnlichen Profils des Werkstücks erfolgen.

Das taktile Messelement oder das berührungslose Messmittel kann auf einem Linearschlitten angeordnet sein, mit dem es in eine translatorische Richtung bewegt und positioniert werden kann.

Zusätzlich kann auch ein induktiver Sensor in der Schleif- oder Poliermaschine angeordnet sein, mit dem die Lage der Zahnlücken oder Profillücken ermittelt werden.

Das vorgeschlagene Konzept erlaubt somit eine effektive Ermittlung des tatsächlich vorhandenen Aufmaßes sowie Härteverzugs vor der Bearbeitung.

Zeitparallel zur Bearbeitung eines Werkstücks auf der ersten Werkstückspindel wird somit ein zu bearbeitendes Werkstück auf der zweiten Werkstückspindel mit einem Messtaster oder einem berührungslos arbeitenden Messelement vermessen, hierdurch die Zahn- bzw. Profillücke aufgefunden und das vorliegende Aufmaß und der Härteverzug bestimmt.

Typischerweise sind die beiden Werkstückspindeln in der Werkzeugmaschine permanent angeordnet, wobei zwischen ihnen gegebenenfalls eine Trennwand eingefahren werden kann, um zwei separate Teilräume zu schaffen und so das Kühlschmiermedium von derjenigen Spindel abzuhalten, auf der gerade nicht geschliffen wird. Es ist aber auch möglich, dass die Werkstückspindeln oder zumindest Werkstückaufnahmen mittels eines Handhabungssystems aus der Maschine entnehmbar und in diese wieder einsetzbar sind, so dass die genannte Vermessung bzw. Einmittung außerhalb der Maschine stattfindet.

Die Erfindung nutzt dabei den Umstand, dass mitunter noch hinreichend Zeit während der Schleif- bzw. Polierbearbeitung auf der anderen Werkstückspindel verbleibt, so dass eine Erfassung des tatsächlichen Aufmaßes erfolgen kann.

In vorteilhafter Weise kann bei der vorgeschlagenen Vorgehensweise, die eine sehr viel bessere Positionierung des Werkstücks relativ zum Schleif- bzw. Polierwerkzeug ermöglicht, auf den Einsatz eines Zweiflankenwälzprüfstandes verzichtet werden, welche ansonsten häufig zur Qualitätssicherung eingesetzt wird.

Weiterhin wird es möglich, dass der Schleif- bzw. Polierprozess individuell für jedes zu bearbeitende Werkstück optimiert eingestellt wird, indem optimal angepasste Schleif- bzw. Polierparameter in Abhängigkeit des vorher ermittelten effektiven Aufmaßes für das Schleifen oder Polieren vorgegeben werden.

Ist die Taktzeit ausreichend groß, kann vor dem Entladen des fertig geschliffenen bzw. polierten Werkstücks dieses nochmals mittels des Messtasters bzw. des berührungslos arbeitenden Messelements vermessen werden, um so gegebenenfalls vorhandene Abweichungen zu erfassen, nämlich eine Abweichung zwischen der idealen Lage der Verzahnung bzw. Profilierung auf dem Grundkörper des Werkstücks und der sich aufgrund des Härteverzugs bzw. tatsächlichen Aufmaßes ergebenen Geometrie des Werkstücks. Über die Auswertung derartige systematische Abweichungen kann gegebenenfalls mit korrigierten Einstellungen gearbeitet werden und der Schleif- bzw. Polierprozess so in einem geschlossenen Regelkreis optimiert werden.

Durch die vorgeschlagene Vorgehensweise wird es mit geringem Aufwand möglich, ohne Verlängerung der Bearbeitungszeiten das effektive Aufmaß des zu bearbeitenden Werkstücks festzustellen. In Kenntnis desselben kann dann der Schleif- bzw. Polierprozess optimiert werden.

Die Verwendung des vorgeschlagenen Messtaster bzw. des berührungslos arbeitenden Messelements ersetzt generell den ansonsten bislang zum Einsatz kommenden induktiven Sensor und bietet zusätzlich die Möglichkeit, das tatsächliche Flankenaufmaß zumindest einer, vorzugsweise einer Anzahl und besonders bevorzugt aller Lücken zu erfassen.

Möglich ist es allerdings auch, dass weiterhin zusätzlich der induktive Sensor eingesetzt wird, um in Kombination des Sensors mit dem Messtaster bzw. dem berührungslos arbeitenden Messelement einen weiter optimierten Verfahrensablauf zu realisieren. In diesem Falle kann vorgesehen werden, dass der Messtaster bzw. das berührungslos arbeitende Messelement nur eine einzige Lücke vermisst und hierdurch das Aufmaß erfasst wird, so dass das Werkstück anhand dieser Lücke ausgerichtet bzw. eingemittet werden kann. Der induktive Sensor könnte dann zusätzlich alle anderen Zähne bzw. Lücken erfassen, so dass mit der schon per Messtaster gemessenen Referenzlücke und des ermittelten Aufmaßes sowie der weiteren Informationen des induktiven Sensors eine verbesserte Aussage über das komplette Werkstück getroffen werden kann.

Die Positionierung des taktilen Messelements (insbesondere des Messtasters) bzw. des berührungslos arbeitenden Messelements erfolgt bevorzugt über eine Linearachse der Schleifmaschine. Dabei kann nach einer Kalibrierung des Messtasters mittels eines Referenzkörpers bekannter Geometrie (z. B. Kugel mit bekanntem Durchmesser) der Messtaster mittels der Linearachse gezielt in die benötigte Position verfahren werden.

Die erfassten Messwerte des Messtasters bzw. des berührungslos arbeitenden Messelements werden von der Maschinensteuerung erfasst und in an sich bekannter Weise verarbeitet, um bezüglich der Verzahnung bzw. Profilierung die optimale Mittenposition des Werkstücks relativ zum Schleifwerkzeug zu finden.

In den Zeichnungen ist ein Ausführungsbeispiel der Erfindung dargestellt. Es zeigen:
- Fig. 1: eine schematische Darstellung einer Schleifmaschine mit zwei Werkstückspindel und einer Schleifspindel mit einem Schleifwerkzeug und
- Fig. 2: schematisch das Vermessen einer Zahnlücke mittels eines Messtasters.

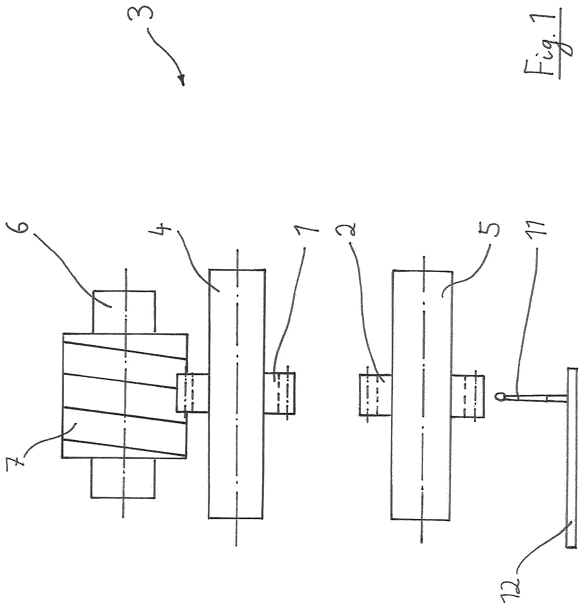

In Fig. 1 ist nur sehr schematisch eine Schleifmaschine 3 dargestellt, die mit zwei Werkstückspindeln 4 und 5 sowie einer Schleifspindel 6 ausgestattet ist. Auf den beiden Werkstückspindeln 4 und 5 kann im Ausführungsbeispiel jeweils ein Werkstück 1 bzw. 2 aufgenommen (aufgespannt) werden. Auf der Schleifspindel 6 ist ein Schleifwerkzeug 7 in Form einer Schleifschnecke angeordnet.

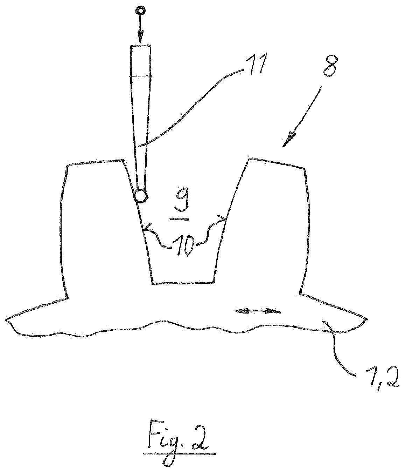

Wie aus der Zusammenschau mit Figur 2 hervorgeht, sind die Werkstücke 1, 2 vorliegend Zahnräder, die eine Verzahnung 8 aufweisen. Allerdings gelten die nachfolgenden Überlegungen gleichermaßen, falls statt eines Zahnrades ein anderes Werkstück mit einer zahnradähnlichen Profilierung bearbeitet wird.

Prinzipiell erfolgt das eigentliche Schleifen mittels der Schleifschnecke 7 durch Schleifen des Werkstücks 1 auf einer der beiden Werkstückspindeln 4, während auf der anderen Werkstückspindel 5 Vorbereitungshandlungen für das Schleifen erfolgen. Hierzu gehören zunächst das Aufspannen des Werkstücks 2 auf der Werkstückspindel 5 und das anschließende Ausrichten bzw. Einmitten. Das (beispielsweise durch Wälzfräsen) vorbearbeitete Werkstück 1, 2 mit seiner Verzahnung 8 muss nämlich so relativ zur Schleifschnecke 7 positioniert werden, dass die Abrasivflächen der Schleifschnecke in die Zahnlücken 9 der Verzahnung 8 eingreifen (siehe Figur 2).

Durch den Schleifvorgang wird dann ein Aufmaß von den jeweiligen Zahnflanken 10 durch das Schleifwerkzeug 7 abgetragen.

Hierzu ist vorgesehen, dass während des Schleifens des einen Werkstücks 1 auf der einen Werkstückspindel 4 zeitlich parallel das Werkstück 2 auf der anderen Werkstückspindel 5 einem Messvorgang mittels eines Messtasters 11 unterzogen wird, wie es schematisch in Figur 2 dargestellt ist.

Dabei werden zumindest in einer Zahnlücke 9 die beiden sich gegenüber liegenden Zahnflanken 10 durch Antasten vermessen und so festgestellt, wie groß das effektive Aufmaß der Verzahnung ist. Der Messtaster 11 ist zu diesem Zweck auf einem Linearschlitten 12 platziert, so dass er in die benötigte Messposition verfahren werden kann. In Figur 2 ist hierzu mit Pfeilen angedeutet, wie eine radiale Verschiebung des Messtasters 11 relativ zur Verzahnung 8 erfolgt, weiterhin wird das Werkstück in Umfangsrichtung hin und her gedreht, um punktweise die Kontur der zu schleifenden Zahnflanke 10 zu erfassen.

Anhand des vermessenen Aufmaßes zumindest einer, vorzugsweise einer Vielzahl und besonders bevorzugt aller Zahnlücken 9 lässt sich somit die optimale Einmittposition des Werkstücks 2 relativ zur Schleifschnecke 7 festlegen, so dass im Idealfall gleich viel Material von den beiden sich gegenüberliegenden Zahnflanken 10 abgetragen wird.

Eine solche Optimierung des Schleifvorgangs ist nur bedingt möglich, wenn lediglich, gemäß dem Stand der Technik, mittels eines induktiven Sensors die Lage der Zahnlücken erfasst wird und auf dieser Basis das Einmitten des Werkstücks erfolgt. In diesem Falle fehlt nämlich jede Information zum tatsächlichen Aufmaß.

Die Vermessung mittels Messtaster in der beschriebenen Weise benötigt zwar mehr Zeit als das Einmitten per Induktivsensor, allerdings steht in vielen Fällen diese Zeit zur Verfügung, bis das zeitlich parallel geschliffene Werkstück fertig ist.

Abhängig von den erfassten Werten für das effektive Aufmaß kann dann in Fortbildung des vorgeschlagenen Verfahrens vorgesehen werden, dass die Fertigungsparameter angepasst werden, um den Schleifvorgang zu optimieren. Hierbei ist insbesondere daran gedacht, die Vorschubgeschwindigkeit zwischen Schleifwerkzeug 7 und Werkstück 1, 2 zu verändern bzw. anzupassen. Genauso kann in Erwägung gezogen werden, die Anzahl der Schleifhübe bzw. die Größe der Zustellung des Schleifwerkzeugs 7 zum Werkstück 1, 2 anzupassen. Das über die Zeit abgetragene Zerspanvolumen kann so in einen gewünschten Bereich und insbesondere konstant gehalten werden.

Während des Schleifens des Werkstücks 2 wird zeitlich parallel auf der anderen Werkzeugspindel das fertige Werkstück 1 entnommen und das nächste Werkstück gespannt und in der beschriebenen Weise vermessen. Somit werden jeweils abwechselnd auf den beiden Werkstückspindeln Werkstücke geschliffen. Der beschriebene Vorgang der Aufmaßbestimmung findet also wechselweise auf den beiden Werkstückspindeln jeweils parallel zur Bearbeitungshauptzeit statt.

### Bezugszeichenliste:

- 1: Werkstück (Zahnrad)
- 2: Werkstück (Zahnrad)
- 3: Schleifmaschine / Poliermaschine
- 4: Werkstückspindel
- 5: Werkstückspindel
- 6: Schleifspindel
- 7: Schleifwerkzeug (Schleifschnecke)
- 8: Verzahnung / zahnradähnliches Profil
- 9: Zahnlücke / Profillücke
- 10: Zahnflanke / Profilflanke
- 11: taktiles Messelement (Messtaster) / berührungsloses Messmittel (Laser)
- 12: Linearschlitten

## Patentansprüche

1. Verfahren zum Schleifen oder Polieren eines Zahnrads (1, 2) oder eines Werkstücks mit einem zahnradähnlichen Profil in einer Schleif- oder Poliermaschine (3), wobei die Schleif- oder Poliermaschine (3) mindestens zwei Werkstückspindeln (4, 5) zur Aufnahme eines Werkstücks (1, 2) und mindestens eine Schleif- oder Polierspindel (6) mit einem Schleif- oder Polierwerkzeug (7) aufweist, wobei das Verfahren die Schritte aufweist:
a) Schleifen oder Polieren eines ersten auf einer Werkstückspindel (4) aufgenommenen Werkstücks (1);
b) zeitlich parallel zum Schleifen oder Polieren des ersten Werkstücks (1): Aufnehmen eines zweiten Werkstücks (2) auf der weiteren Werkstückspindel (5) und Vermessen der Verzahnung (8) oder des zahnradähnlichen Profils des Werkstücks (2), um die Lage der Zahnlücken (9) oder Profillücken zu ermitteln, wobei das Vermessen der Verzahnung (8) oder des zahnradähnlichen Profils das Abtasten der Zahn- oder Profilflanken (10) mindestens einer Zahn- oder Profillücke (9) mittels eines taktilen Messelements (11) oder eines berührungslosen Messmittels umfasst, um das effektive Aufmaß auf den Zahn- oder Profilflanken (10) zu ermitteln; und
c) nach Beendigung des Schleifens oder Polierens des ersten Werkstücks (1): Schleifen oder Polieren des zweiten auf der weiteren Werkstückspindel (5) aufgenommenen Werkstücks (2) unter Zugrundelegung der ermittelten Lage der Zahnlücken (9) oder Profillücken und/oder des gemessenen effektiven Aufmaßes auf der Zahn- oder Profilflanke (10).

2. Verfahren nach Anspruch 1, **dadurch gekennzeichnet, dass** bei der Durchführung des Schritts b) von Anspruch 1 eine Mehrzahl von Zahn- oder Profillücken (9) abgetastet werden.

3. Verfahren nach Anspruch 1, **dadurch gekennzeichnet, dass** bei der Durchführung des Schritts b) von Anspruch 1 alle Zahn- oder Profillücken (9) abgetastet werden.

4. Verfahren nach einem der Ansprüche 1 bis 3, **dadurch gekennzeichnet, dass** die Vermessung gemäß Schritt b) von Anspruch 1 mittels eines Messtasters (11) erfolgt.

5. Verfahren nach einem der Ansprüche 1 bis 3, **dadurch gekennzeichnet, dass** die Vermessung gemäß Schritt b) von Anspruch 1 mittels eines Lasers erfolgt.

6. Verfahren nach einem der Ansprüche 1 bis 5, **dadurch gekennzeichnet, dass** das Schleifen oder Polieren gemäß Schritt c) von Anspruch 1 unter Vorgabe von Schleif- oder Polierparametern erfolgt, die das tatsächlich vorliegende Aufmaß auf den Zahn- oder Profilflanken (10) berücksichtigt.

7. Verfahren nach Anspruch 6, **dadurch gekennzeichnet, dass** der beeinflusste Parameter die Vorschubgeschwindigkeit zwischen Schleif- oder Polierwerkzeug (7) und Werkstück (1, 2) und/oder die Anzahl der Schleif- oder Polierhübe und/oder die Größe der Zustellung des Schleif- oder Polierwerkzeugs (7) zum Werkstück (1, 2) ist.

8. Verfahren nach einem der Ansprüche 1 bis 6, **dadurch gekennzeichnet, dass** nach dem Schleifen oder Polieren gemäß Schritt c) von Anspruch 1 ein nochmaliges Vermessen der geschliffenen oder polierten Verzahnung oder des zahnradähnlichen Profils des Werkstücks erfolgt.

9. Verfahren nach einem der Ansprüche 4 bis 8, **dadurch gekennzeichnet, dass** das taktile Messelement (11) oder das berührungslose Messmittel auf einem Linearschlitten (12) angeordnet ist, mit dem es in eine translatorische Richtung bewegt und positioniert werden kann.

10. Verfahren nach einem der Ansprüche 1 bis 9, **dadurch gekennzeichnet, dass** zusätzlich ein induktiver Sensor in der Schleif- oder Poliermaschine angeordnet ist, mit dem die Lage der Zahnlücken oder Profillücken (9) ermittelt werden.

## Claims

1. Method of grinding or polishing a gear (1, 2) or a workpiece having a gear-like profile in a grinding or polishing machine (3), wherein the grinding or polishing machine (3) comprising at least two workpiece spindles (4, 5) for receiving a workpiece (1, 2) and at least one grinding or polishing spindle (6) having a grinding or polishing tool (7), wherein the method comprising the steps of:
a) Grinding or polishing of a first workpiece (1) received on a workpiece spindle (4);
b) simultaneously to the grinding or polishing of the first workpiece (1): Picking up a second workpiece (2) on the further workpiece spindle (5) and measuring the toothing (8) or the gear-like profile of the workpiece (2) in order to determine the position of the tooth gaps (9) or profile gaps, wherein measuring the toothing (8) or the gear-like profile comprises scanning the tooth or profile flanks (10) of at least one tooth or profile gap (9) by means of a tactile measuring element (11) or a non-contact measuring means in order to determine the effective allowance on the tooth or profile flanks (10); and
c) after completion of the grinding or polishing of the first workpiece (1): grinding or polishing of the second workpiece (2) received on the further workpiece spindle (5) on the basis of the determined position of the tooth gaps (9) or profile gaps and/or the measured effective allowance on the tooth or profile flank (10).

2. Method according to claim 1, **characterized in that** a plurality of tooth or profile gaps (9) are scanned when performing step b) of claim 1.

3. Method according to claim 1, **characterized in that** all tooth or profile gaps (9) are scanned when performing step b) of claim 1.

4. Method according to one of claims 1 to 3, **characterized in that** the measurement according to step b) of claim 1 is carried out by means of a measuring probe (11).

5. Method according to one of claims 1 to 3, **characterized in that** the measurement according to step b) of claim 1 is carried out by means of a laser.

6. Method according to one of claims 1 to 5, **characterized in that** the grinding or polishing according to step c) of claim 1 is carried out by specifying grinding or polishing parameters which take into account the actual allowance on the tooth or profile flanks (10).

7. Method according to claim 6, **characterized in that** the influenced parameter is the feed rate between grinding or polishing tool (7) and workpiece (1, 2) and/or the number of grinding or polishing strokes and/or the amount of infeed of the grinding or polishing tool (7) to the workpiece (1, 2).

8. Method according to one of claims 1 to 6, **characterized in that** after grinding or polishing according to step c) of claim 1, the ground or polished toothing or the gear-like profile of the workpiece is measured again.

9. Method according to one of claims 4 to 8, **characterized in that** the tactile measuring element (11) or the non-contact measuring means is arranged on a linear slide (12) with which it can be moved and positioned in a translatory direction.

10. Method according to one of claims 1 to 9, **characterized in that** an inductive sensor is additionally arranged in the grinding or polishing machine, with which the position of the tooth gaps or profile gaps (9) are determined.

## Revendications

1. Procédé de ponçage ou de polissage d'une roue dentée (1, 2) ou d'une pièce ayant un profil de type roue dentée dans une machine de ponçage ou de polissage (3), la machine de ponçage ou de polissage (3) présentant au moins deux broches de pièce (4, 5) pour recevoir une pièce (1, 2) et au moins une broche de ponçage ou de polissage (6) avec un outil de ponçage ou de polissage (7), le procédé comprenant les étapes suivantes :
a) le ponçage ou le polissage d'une première pièce (1) reçue sur une broche de pièce (4) ;
b) parallèlement dans le temps au ponçage ou au polissage de la première pièce (1) : la réception d'une deuxième pièce (2) sur l'autre broche de pièce (5) et la mesure de la denture (8) ou du profil de type roue dentée de la pièce (2) afin de déterminer la position des entredents (9) ou des interstices de profil, la mesure de la denture (8) ou du profil de type roue dentée comprenant le balayage des flancs de dent ou de profil (10) d'au moins un entredent ou un interstice de profil (9) au moyen d'un élément de mesure tactile (11) ou d'un moyen de mesure sans contact, afin de déterminer la dimension effective sur les flancs de dent ou de profil (10) ; et
c) après la fin du ponçage ou du polissage de la première pièce (1) : le ponçage ou le polissage de la deuxième pièce (2) reçue sur l'autre broche de pièce (5) en se fondant sur la position déterminée des entredents (9) ou interstices de profil et/ou sur la dimension effective mesurée sur le flanc de dent ou de profil (10).

2. Procédé selon la revendication 1, **caractérisé en ce que**, lors de la réalisation de l'étape b) de la revendication 1, une pluralité d'entredents ou d'interstices de profil (9) sont balayés.

3. Procédé selon la revendication 1, **caractérisé en ce que**, lors de la réalisation de l'étape b) de la revendication 1, tous les entredents ou interstices de profil (9) sont balayés.

4. Procédé selon l'une quelconque des revendications 1 à 3, **caractérisé en ce que** la mesure selon l'étape b) de la revendication 1 est effectuée au moyen d'un palpeur de mesure (11).

5. Procédé selon l'une quelconque des revendications 1 à 3, **caractérisé en ce que** la mesure selon l'étape b) de la revendication 1 est effectuée au moyen d'un laser.

6. Procédé selon l'une quelconque des revendications 1 à 5, **caractérisé en ce que** le ponçage ou le polissage selon l'étape c) de la revendication 1 est effectué en définissant des paramètres de ponçage ou de polissage qui tiennent compte de la dimension réellement présente sur les flancs de dent ou de profil (10).

7. Procédé selon la revendication 6, **caractérisé en ce que** le paramètre influencé est la vitesse d'avance entre l'outil de ponçage ou de polissage (7) et la pièce (1, 2) et/ou le nombre de courses de ponçage ou de polissage et/ou l'importance de l'avancement de l'outil de ponçage ou de polissage (7) par rapport à la pièce (1, 2).

8. Procédé selon l'une quelconque des revendications 1 à 6, **caractérisé en ce qu'**après le ponçage ou le polissage selon l'étape c) de la revendication 1, une nouvelle mesure de la denture poncée ou polie ou du profil de type roue dentée de la pièce est effectuée.

9. Procédé selon l'une quelconque des revendications 4 à 8, **caractérisé en ce que** l'élément de mesure tactile (11) ou le moyen de mesure sans contact est agencé sur un chariot linéaire (12), avec lequel il peut être déplacé et positionné dans une direction de translation.

10. Procédé selon l'une quelconque des revendications 1 à 9, **caractérisé en ce qu'**un capteur inductif est en outre agencé dans la machine de ponçage ou de polissage, avec lequel la position des entredents ou des interstices de profil (9) est déterminée.
